# EUROPEAN PATENT SPECIFICATION

(11) **EP 2 038 035 B1**
(45) Date of publication and mention of the grant of the patent: **22.12.2010**
(21) Application number: 07725700.4
(22) Date of filing: 31.05.2007
(51) Int. Cl.: B01D 29/41, B01D 29/01

(54) **DISC-SHAPED FILTER ELEMENTS AND METHODS TO PROVIDE DISC-SHAPED FILTER ELEMENTS**
SCHEIBENFÖRMIGE FILTERELEMENTE UND VERFAHREN ZUR BEREITSTELLUNG SCHEIBENFÖRMIGER FILTERELEMENTE
ÉLÉMENTS FILTRANTS EN FORME DE DISQUE ET PROCÉDÉS FOURNISSANT DES ÉLÉMENTS FILTRANTS EN FORME DE DISQUE

(30) Priority: 31.05.2006 EP 06011185
(43) Date of publication of application: 25.03.2009
(73) Proprietor: NV Bekaert SA, 8550 Zwevegem (BE)
(72) Inventor: VERSCHAEVE, Frank, B-8553 Otegem (BE); VANACKER, Frank, B-8700 Tielt (BE)
(74) Representative: Bird, William Edward
(86) International application number: PCT/EP2007/004815
(87) International publication number: WO 2007/137843

(56) References cited:
- EP-A2- 0 284 404
- WO-A-89/09644
- US-A- 4 637 877
- US-A1- 2005 167 353
- US-A1- 2005 205 489

## Description

### Technical field of the invention

The present invention relates to disc-shaped filter elements and methods to provide disc-shaped filter elements as well as devices including such disk-shaped filter elements.

### Background of the invention

Disc shaped filter elements or leaf discs are well known in the art. For example, it is known to stack several disc shaped filter elements concentrically on a perforated tube, which stack is located in a filter housing. A liquid, e.g. edible liquids such as oils, fruit juice or wines, are filtered by providing the particle loaded liquid to the outer side of the disc shaped filter elements, and discharging filtrate via the perforated tube, when the filtrate has passed though the filter membranes being part of the disc shaped filter elements.

Examples of a disc shaped filter element are described in US4902420 and US4637877. Further examples are disclosed in WO 89/09644 and EP 0284404. In US4637877, a disc shaped filter element comprises a hub and two filter media being sheets of fibers. The disc shaped filter element further comprises two perforated plates. Along the outer edge of the disc shaped filter element, the filter media and the plates are welded together. The two filter media are welded to the hub along their inner edge.

Such filter discs, as shown in the second figure of US4637877, have some disadvantages. The filter media are not supported along their surface by the plates. During filtration, the filter media is forced to the plate means, which creates the excess of filter media to wrinkle. These wrinkles are weak locations, which will be the origin of the bursts during cleaning. When such discs are cleaned by back flushing, as is often done, the filter media are not supported. This causes either the media to burst, or, in order to avoid such burst; the media are to be provided sufficiently strong and thick, i.e. at least self-supporting.

Other disc shaped filter elements have a support along the surface of the filter media, e.g. as shown in US6343697. However often it is noticed that the disc shaped filter elements tends to buckle to one side of its sides, causing the disc shaped filter element to be rather 'dish-like'. This is especially the case when temperatures are used during fixing of several elements to each other, e.g. during welding of the filter media to the support plate along the outer edge.

Such distortion disturbs the proper use of the disc shaped filter elements because the preset distances between adjacent elements in a stack is no longer met. This may cause improper cleaning of the discs or a reduction of the filtration yield.

### Summary of the invention

It is an object of the present invention to provide good disc shaped filter elements, and methods to provide such disc shaped filter elements. It is an advantage of some embodiments of the present invention that the disc shaped filter elements do not have the tendency, or at least to a less extent, to buckle to one side.. Hence they do not have the tendency, or at least to a lesser extent, to bend to one side when being installed or used. It is an advantage of some embodiments of the present invention that the filter membranes are fully supported by a supporting means. It is an advantage of some embodiments of the present invention to provide disc-shaped filter elements, which have less risk of filter membrane rupture during cleaning by means of back pulse, back flow of back washing. It is an advantage of some embodiments of the present invention to provide a method of manufacturing disc-like filter elements that is less sensitive to production parameter fluctuations.

According to the present invention, methods to provided disc-like filter elements and disc-like filter elements are provided..

According to a first aspect of the present invention, a first method to provide a disc-shaped filter element comprises the steps of •
- providing a first and a second substantially identical, ring-like shaped, substantially flat liquid permeable support member having an outer edge and an inner central edge. The first support member and the second support member each have a first surface and a second surface;
- providing a first and a second substantially identical, ring-like shaped, substantially flat filter membrane having an outer edge and an inner central edge;
- providing a hub having a central void space, an outer wall, at least one channel extending from the void space to the outer wall and a coupling means for coupling the inner edges of the support members and the inner edges of the filter membranes to the hub;
- bringing the first filter membrane into contact with a first surface of the first support member;
- bringing the second filter membrane into contact with a first surface of the second support member;
- coupling the inner edges of the first membrane and the inner edges of the first support member liquid tight to the coupling means of the hub;
- coupling the inner edges of the second membrane and the inner edges of the second support member liquid tight to the coupling means of the hub in such a way that the second surface of the first support member and the second surface of the second support member are facing to each other and are separated from each other over a distance H being different from zero at the outer wall of the hub, and having the at least one channel extending between the second surface of the first support member and the second surface of the second support member; and
- bending and liquid-tight fixing the outer edges of the first filter membrane, the outer edges of the second filter membrane, the outer edges of the first filter membrane and the outer edges of the second filter membrane to each other.

According to a second, alternative method according to the first aspect of the present invention, the method comprises the steps of
- providing a first and a second substantially identical, ring-like shaped, substantially flat liquid permeable support member having an outer edge and an inner central edge, the first support member and the second support member each having a first surface and a second surface;
- providing a first and a second substantially identical, ring-like shaped, substantially flat filter membrane having an outer edge and an inner central edge;
- providing a hub having a central void space, an outer wall, at least one channel extending from void space to the outer wall and a coupling means for coupling the inner edges of the support members and the inner edges of the filter membranes to the hub;
- bringing the first filter membrane into contact with a first surface of the first support member;
- bringing the second filter membrane into contact with a first surface of the second support member;
- liquid-tight fixing the outer edges of the first filter membrane, the outer edges of the second filter membrane, the outer edges of the first filter membrane and the outer edges of the second filter membrane to each other in such a way that the second surface of the first support member and the second surface of the second support member are facing to each other;
- coupling the inner edges of the first membrane, the inner edges of the second membrane, the inner edges of the first support member and the inner edges of the second support member liquid tight to the coupling means of the hub in such a way that the second surface of the first support member and the second surface of the second support member are separated from each other over a distance H being different from zero at the outer wall of the hub, and having the at least one channel extending between the second surface of the first support member and the second surface of the second support member.

According to some embodiments of this second method according to the first aspect of the present invention, the step of coupling the inner edges of the first membrane, the inner edges of the second membrane, the inner edges of the first support member and the inner edges of the second support member liquid tight to the coupling means of the hub may be done by:
- introducing the hub between the second surface of the first support member and the second surface of the second support member through the inner edges of the first membrane and the inner edges of the first support member or through the inner edges of the second membrane and the inner edges of the second support member;
- coupling the inner edges of the first membrane and the inner edges of the first support member liquid tight to the coupling means of the hub;
- coupling the inner edges of the second membrane and the inner edges of the second support member liquid tight to the coupling means of the hub.

According to some embodiments of the present invention, the hub may comprise a first part and a second part, the parts cooperating with each other for forming the hub. The step of introducing the hub between the second surface of the first support member and the second surface of the second support member may be done by introducing the first part and the second part, and liquid tight coupling these first and second part to each other.

It is an advantage of some disc shaped filter elements obtained using the first or second method of the first aspect of the present invention, that the filter element has two outer disc-shape filter membranes which are supported by the support members, which support members tends to bulge outwards, i.e. away from the inner space of the disc shaped filter. The support members, bulging outwards, are permanently under tension and exert an outwards force to the filter membranes, which tension provides the membrane to contact the support member over substantially its whole surface. The support members are provided with a radius of curvature r being smaller of equal to (K²/4H)+H/4 along at least a substantial part of the disc shaped filter elements filter surface. K is the diameter of the disc-like filter element, whereas H is the distance between the first support member and the second support member at the outer wall of the hub of the filter element. This radius of curvature and bugling outwards, have the advantage that the disc filter does not have the tendency to bend to one side when being installed or used. As the filter membranes are tensioned on the support members, they don't have the freedom to crease, which creases are a source of ruptures during back cleaning.

According to some embodiments of the present invention, the central openings of the first support member, the second support member, the first filter membrane and the second filter membrane may be substantially circular. According to some embodiments of the present invention, the central openings of the first support member, the second support member, the first filter membrane and the second filter membrane may be substantially identical.

According to some embodiments of the present invention, the filter membranes may comprise metal fibers. These metal fibers may be stainless steel fibers.

According to some embodiments of the present invention, the support member may be a metal support member. The hub may be a metal hub

According to some embodiments of the present invention, the liquid tight fixing of the outer edges of the first filter membrane, the second filter membrane, the first filter membrane and the second filter membrane may be done by welding. Similarly, according to embodiments of the present invention, the coupling of the inner edges of the first membrane and the inner edges of the first support member to the coupling means and the coupling of the inner edges of the second membrane and the inner edges of the second support member to the coupling means may be done by welding.

According to some embodiments of the present invention, at least one or each of the first and second liquid permeable support members may be plates, e.g. perforated plates or expanded plates (e.g. expanded metal sheets), or meshes. Optionally, any of the support members can be rigid. The support members are optionally provided from metal, such as stainless steel. The support members may have a thickness in the range of, for example, 0.5mm to 10mm, optionally in the range of, for example, 0.5mm to 1mm.

According to a second aspect of the present invention, a disc-shaped filter element is provided. The disc-shaped filter element has a diameter K, and comprises a first and a second ring-like shaped, liquid permeable support member having an outer edge having a diameter Ds and an inner central edge, having a largest width Ws. The first support member and the second support member each have a first surface and a second surface, the second surface of the first support member facing towards the second surface of the second support member. The disc-shaped filter element comprises a first and a second ring shape-like filter membrane having an outer edge and an inner central edge, the first filter membrane being in contact with the first surface of the first support member, the second filter membrane being in contact with the first surface of the second support member. The outer edges of the first filter membrane, the second filter membrane, the first support member and the second support member are liquid tight fixed to each other. The disc-shaped filter element further comprises a hub having a central void space, an outer wall, at least one channel extending from this void space to this outer wall and a coupling means. The inner edges of the support members and the inner edges of the filter membranes are liquid tight coupled to the coupling means of the hub. The first surface of the first support member and the second surface of the second support member are separated from each other over a distance H being different from zero at the outer wall of the hub, and the at least one channel extending between the second surface of the first support member and the second surface of the second support member. For each of the first support member and the second support member, the support member are provided with a radius of curvature r being smaller of equal to (K²/4H)+H/4 along at least a zone of the support member, which zone is delimited by a first imaginary circle along the support member having a diameter of 0.9*Ds and a second imaginary circle along the support member having a diameter of 1.1*Ws, the first imaginary circle and the second imaginary circle being concentric with the disc-like support member According to embodiments of the present invention, the zone in which a radius of curvature r being smaller of equal to (K²/4H)+H/4 is provided, may be delimited by the first imaginary circle along the support member may have a diameter of 0.975*Ds and a second imaginary circle along the support member may have a diameter of 1.025*Ws

According to some embodiments of the present invention, H may be in the range of 5mm to 20mm. According to embodiments of the present invention, K may be in the range of 150mm to 400mm.

According to some embodiments of the present invention, the central openings of the first support member, the second support member, the first filter membrane and the second filter membrane may be substantially circular and/or may be substantially identical.

According to some embodiments of the present invention, the filter membranes may comprise metal fibers, optionally stainless steel fibers. According to embodiments of the present invention, the support member may be a metal support member. According to embodiments of the present invention, the hub may be a metal hub.

According to some embodiments of the present invention, the liquid tight fixing of the outer edges of the first filter membrane, the second filter membrane, the first filter membrane and the second filter membrane may be welded. Optionally, the coupling of the inner edges of the first membrane and the inner edges of the first support member to the coupling means and the coupling of the inner edges of the second membrane and the inner edges of the second support member to the coupling means is welded.

According to some embodiments of the present invention, each of the first and second liquid permeable support members may be plates, e.g. perforated plates or expanded plates (e.g. expanded metal sheets), or meshes. The support members are optionally provided from metal, such as stainless steel. The support members may have a thickness in the range of 0.5mm to 10mm, optionally in the range of 0.5mm to 1 mm.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The teachings of the present invention permit the design of improved methods and apparatus for filtration of liquids. The apparatus for filtration can be used for filtration of liquids, such as edible liquids, e.g. beverages like beer, wine, fruit juice, milk or alike, or oils such as olive oil. The apparatus for filtration may be used for filtration of non-edible fluids, e.g. machine oil or emulsions such as cutting oil, coolants, liquids out of which catalytic elements may be recovered, bio-ethanol or biodiesel, or fluids from pharmaceutical, biochemical or biomedical applications.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematic view of several different steps of a method to provide a disc-shaped filter element according to an embodiment of the present invention.
Fig. 2 is a schematic view of several different steps of a method to provide an alternative disc-shaped filter element according to an embodiment of the present invention.
Fig. 3 is a schematic view of several different steps of an alternative method to provide a disc-shaped filter element according to an embodiment of the present invention.

In the different figures, the same reference signs refer to the same or analogous elements.

### Definitions

The following terms are provided solely to aid in the understanding of the invention. These definitions should not be construed to have a scope less than understood by a person of ordinary skill in the art.

The term "equivalent diameter" of a fiber is to be understood as the diameter of an imaginary circle, having the same surface as the average surface of a radial cross section of the fiber.

The term "liquid" is to be understood as encompassing in a broad sense, e.g. such as edible liquids, e.g. beverages like beer, wine, fruit juice or alike, or oils such as olive oil and non-edible fluids, e.g. machine oil or emulsions such as cutting oil, coolants, liquids out of which catalytic elements may be recovered, bio-ethanol or biodiesel, or fluids from pharmaceutical, biochemical or biomedical applications.

The term "mesh" is to be understood as a woven, knitted, knotted or welded material of open structure with optionally evenly spaced holes.

The term "metal fiber" is to be understood as a fiber made of any metal or metal alloy. An example of a suitable alloy is a stainless steel alloy such as AIS1316 or AIS1316 e.g. AIS1316L. Metal fibers may be provided by different suitable production processes such as e.g. bundle drawing process according to US3379000, coil shaving process such as known from EP319959 or metal fibers provided by melt extraction such as described in US5027886. Metal fibers are characterised by an equivalent diameter, for the invention preferably in the range of 1µm to 120µm, such as in the range of 1µm to 60µm. The fibers may be endless long fibers (also referred to as filaments,) or may be provided as staple fibers having an average length in the range of 1mm to 90mm. Optionally, the metal fibers are short metal fibers, obtained from the method as described in WO2005/099863, WO2005/099864 and WO2005/099940. A combination of short metal fibers and staple metal fibers may as well be used, e.g. comprising up to 20% in weight of staple metal fibers.

The term "filter membrane" is to be understood any membrane, which is able to separate particles from a liquid. The filter membranes used for the present invention may be suitable for surface filtration as well as depth filtration. Filter membranes preferably have a thickness in the range from 0.025mm to 2mm, and may have a porosity P in the range of 40% to 95%. Metal fibers may be used for the filter membrane. Optionally, metal fibers may be blended with ceramic fibers and/or with ceramic powder and/or ceramic whiskers and/or metal powder. Optionally, the particles are provided with a catalytic component and act as a catalyst carrier. Preferably the particle diameter is less than 1/5 of the equivalent diameter of the fibers used. The ceramic fibers or powder may be made out of Al₂O₃, SiO₂ or YSZ (yttrium stabilized zirconium).

The filter membranes are preferably sintered filter membranes, especially in case the filtration membrane comprises or consists of metal fibers. Metal fiber filter membranes may be provided by the methods as described in WO2005/099863, WO2005/099864 and WO2005/099940. Optionally, the filter membranes may further comprise metal wires or metal expanded plates to reinforce the filter membrane. Metal wires may be present as metal wire mesh or grid. Alternatively or additionally, the filter membrane may comprise metal powder sheets, perforated sheets such as perforated synthetic sheets or expanded synthetic sheets.

The term "porosity P" of a filter membrane is to be understood as 100-D, wherein D is the density of the filter membrane. The density D is the filter membrane consisting from a given material, is the ratio, expressed in percentage, of the weight per volume of the filter membrane over the theoretical weight of that same volume, in case this whole volume would have been provided completely out of said material.

The term 'ring shape-like" is to be understood as having a shape with an outer edge being substantially circular, and having an inner edge which inner edge encompasses the centre of the outer edge and which inner edge is usually concentric with the outer edge, although the inner edge is not necessarily circular. A circular inner edge is however preferred. The maximum width W of the inner edge is to be understood as the larges distance measurable between two points of the inner edge. As an example, in case the inner edge has a circular shape, W is the diameter of the circle. In case the inner edge is rectangular, the maximum width W is the length of a diagonal.

The term "radius r" is to be understood as the radius measured along the line of intersection of the filter membrane and a plane comprising the axis of the disc-shaped filter element.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiments, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The invention will now be described by a detailed description of several embodiments of the invention.

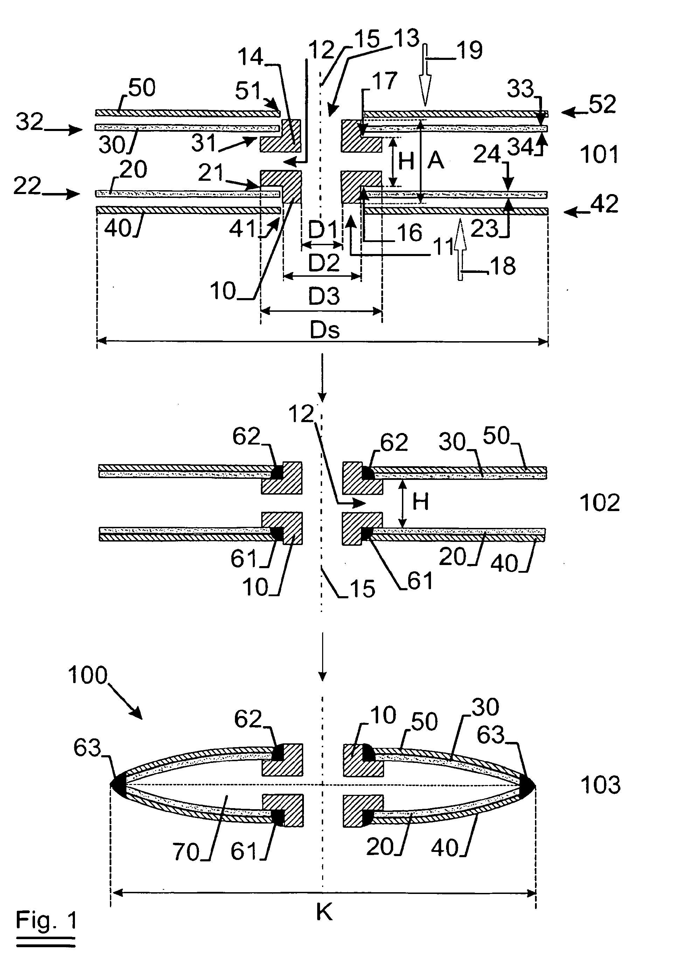

A first embodiment of a method to provide a disc-shape filter element is set out schematically in Fig. 1. As referred to by reference 101, a number of elements of the disc-shape filter element are provided. A hub 10 is provided having a coupling means 11, an outer wall 14 an inner void space 13 and at least one channel 12 extending from the inner void space 13 to the outer wall 14. As shown in Fig. 1, the hub 10 is a tubular metal part having a central axis 15. The outer wall of the tube 14 has two rims 16 and 17, which are the coupling means 1.1 of the hub. Through the wall of the tubular part, a number of channels 12 are provided which channels 12 extend from the inner void of the tube to the outer wall 14. As an example, the hub has a diameter D1 of the inner void space of 50mm. The outer diameter D3 of the hub is about 70mm, whereas at the location of the rims 16 and 17, the diameter D2 of the tubular element is about 60mm. The total height A of the hub is about 10mm, whereas the distance H between the two rims is about 8mm. The height H however may preferably be in the range of 5mm to 20mm, and larger heights H are used for larger diameters Ds, ranging preferably from 150mm to 400mm.

A first and a second substantially identical ring-like shaped, substantially flat liquid permeable support members 20 and 30 are provided. The outer edge 22 and 32 of the support members 20 and 30 are substantially identical and have a diameter Ds in this embodiment of about 300mm. The support members are a liquid permeable support members, i.e. liquid may flow from one of the first and second surface to the other of the first and second surface of the support member through the support member. Optionally, the support members may be perforated or expanded plates, such as expanded or perforated metal plates, or may be meshes, such as a woven, braided, knotted, knitted or welded wire meshes made from metal wires. The support members used in the method as set out schematically in Fig. 1, are liquid permeable plates, preferably a stainless steel plates, e.g. provided from AISI 316L of AISI 304 alloy, and preferably have a thickness in the range of 0.5mm to 1 mm. For this particular embodiment, an AISI 316L plate of a thickness of 0.5mm was used. Each one of the plates is provided with apertures such as substantially circular holes or slots. As an example, the slots may be substantially rectangular slots having their long edge substantially in the radial direction of the disc.

The inner edge 21 and 31 of the support members 20 and 30 is substantially circular and coincides with the diameter of the wall 14 of the hub 10 along the rim. The diameter of the inner edge of the support members is identical or slightly larger than D2.

A first and a second substantially identical ring-like shaped, substantially flat filter membrane 40 and 50 are provided. The outer edge 42 and 52 of the filter membranes 40 and 50 are substantially identical and have a diameter Ds of about 300mm. The filter membrane may be a surface filtration membrane such as obtained from the method as described in WO2005/099863. alternatively, a Bekipor® medium 3AI3 from he company NV BEKAERT SA from Zwevegem, Belgium may be used.

The inner edge 41 or 51 of the filter membranes 40 or 50 respectively, is substantially circular and coincide with the diameter of the wall 14 of the hub 10 along the rims 16 and 17. The diameter of the inner edges 41 and 51 of the filter membranes 40 and 50 are identical or slightly larger than D2 and substantially identical to the inner edge 21 and 31 of the support members 20 and 30. The larges distance Ws between two points of the inner edge is thus D2

The first filter membrane 40 is brought into contact with the first surface 23 of the first support member 20. The second filter membrane 50 is brought into contact with the first surface 33 of the first support member 30. The combination of firs filter membrane 40 and first support member 20 is than mounted to the hub by bringing the inner edge 41 of the first filter membrane 40 and the inner edge 21 of the first support member 20 into contact with rim 16 by introducing the tubular element though the inner edges at side 18 of the hub 10. The combination of second filter membrane 50 and second support member 30 is than mounted to the hub 10 by bringing the inner edge 51 of the second filter membrane 50 and the inner edge 31 of the second support member 30 into contact with rim 17 by introducing the tubular element though the inner edges at side 19 of the hub 10. The mounting is done in such a way that the second surface 24 of the first support member 20 is facing the second surface 34 of the second support member 30, and that the at least one channel 12 extends from the inner void space 13 between the second surface 24 of the first support member 20 and the second surface 34 of the second support member 30.

As referred to by reference 102, the inner edges 21 and 41 of the first filter membrane 40 and first support member 20 are now liquid-tight coupled to the hub 10 at the coupling means 11, i.e. the rim 16. In a similar way, the inner edges 31 and 51 of the first filter membrane 50 and first support member 30 are now liquid-tight coupled to the hub 10 at the coupling means 11, i.e. the rim 17. This coupling can be done by any suitable joining technique, e.g. by gluing, but in the present example it is done by TIG-welding. A weld coupling 61 or 62 is provided. Alternatively, other methods of welding such as but welding, capacitive discharge welding, resistance welding, ultrasonic welding, micro plasma welding or laser welding may be used. As an other alternative, soldering such as high temperature soldering or sintering, or brazing, or extrusion of polymer material, fluid tight folding or gluing, may be used to couple the hub, the filter membranes and the support members.

The intermediate product now obtained has a central hub 10, of which two substantially flat support members extend in a plane substantial perpendicular to the central axis 15 of the hub 10. The second surface 24 of the first support member 20 and the second surface 34 of the second support member 30 are separated along the outer wall 14 of the hub 10 over a distance H and are facing each other.

As referred to by reference 103, the outer edges 22, 32, 42 and 52 of the first support member 20, the second support member 30 the first filter membrane 40 and the second filter membrane 50 are now bend to each other and liquid tight fixed to each other. The edges meet at a height, halfway the height of the distance between the two rims 16 and 17. The liquid tight fixing may be made with any suitable joining technique, e.g. preferably done by welding, preferably by TIG-welding. A weld coupling 63 is provided. Alternatively, other methods of welding such as but welding, capacitive discharge welding, resistance welding, ultrasonic welding, micro plasma welding or laser welding may be used. As an other alternative, soldering such as high temperature soldering or sintering, or brazing, or extrusion of polymer material, fluid tight folding or gluing, may be used to couple the first filter membrane 40 and the second filter membrane 50.

A disc-like filter element 100 is now provided having a diameter K, being less than Ds, and which filter element 100 has a void space 70 which is encompassed by the two supporting members 20 and 30 and the inner wall 14 of the hub, which void space 70 has at least one channel via which it can discharge liquid to the inner void space 13 of the hub. Preferably, K is in the range 150mm to 400mm, such as 199.9mm in the case of the embodiment as set out by means of Fig. 1.

The disc-like filter elements have support members 20 and 30, which support member are provided with a radius of curvature r being smaller of equal to (K²/4H)+H/4 along at least a zone of the support member, which zone is delimited by a first imaginary circle along the support member having a diameter of 0.9*Ds and a second imaginary circle along the support member having a diameter of 1.10*Ws, the first imaginary circle and the second imaginary circle being concentric with the disc-like support member, i.e. concentric with the axis 15 of hub 10. The radius r is measured along the intersection of the support member and a plane which comprises the axis of the filter element, and the radius r is inwards oriented, this is to be understood that the center of curvature is located at the side of the support member, which side is oriented towards the other support member. Optionally, as in present embodiment according to Fig. 1, a radius of curvature r being smaller of equal to (K²/4H)+H/4 along at least a zone of the support member, which zone is delimited by a first imaginary circle along the support member having a diameter of 0.975*Ds and a second imaginary circle along the support member having a diameter of 1.025*Ws, the first imaginary circle and the second imaginary circle being concentric with the disc-like support member, i.e. concentric with the axis 15 of hub 10.

The bending radius is directed inwards the disc-like filter element. It has the advantage that the support member provided an outwards force to the filter membrane, which contacts the support member at its first surface. The filter membrane is so-to-say pre-tensioned on the first surface of the support member. This pretension prevents the filter membrane to loose contact with the support member, during use of the filter element, i.e. during filtration or cleaning operation. The support member is suitable for contacting the filter membrane by means of one of the support members' surfaces during use of the filter. The support member is suitable for bringing and maintaining the filter membrane in a fixed shape and position. The pre-tension forces working on the first support member and the second support member also stabilise each other, which is believed to be the reason why during production of the filter cements, the disc-shape filter element does not show a tendency to buckle to one of the sides of the disc-like shape. A dimensionally morse stable filter element is obtained. It was noticed that slight difference in operation parameters, e.g. welding settings, does not influence the stability of the filter element and the production repeatability.

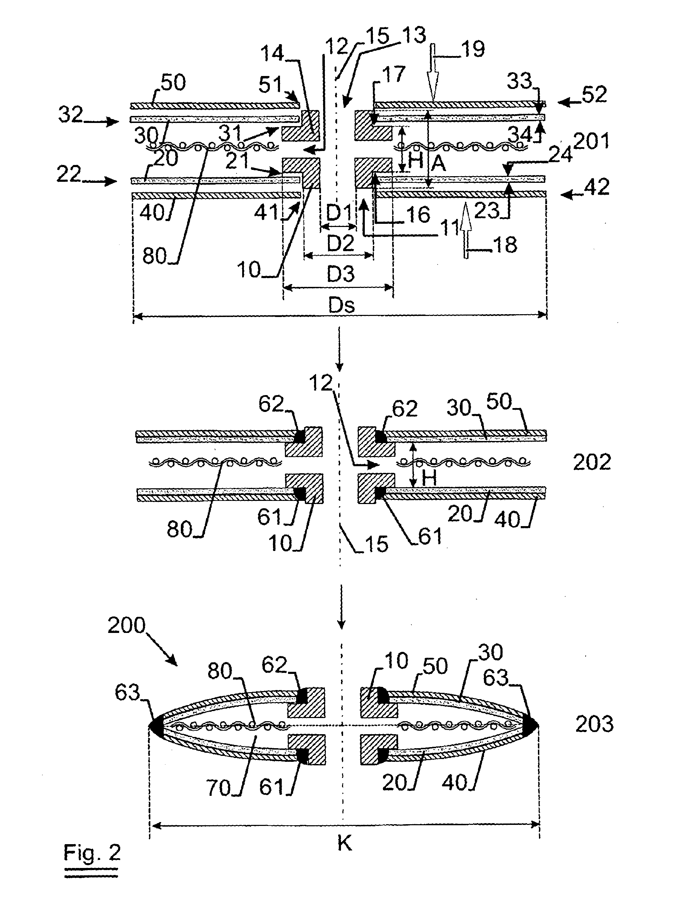

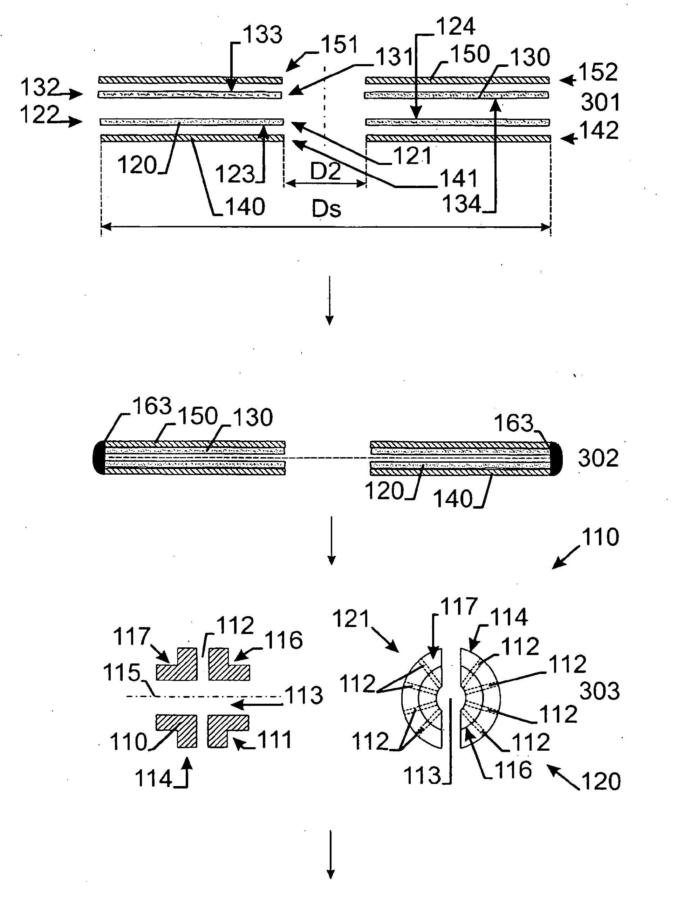

An alternative method to provide an embodiment of a disc-like filter element 200 is schematically shown in Fig. 2. Identical numbers refer to identical features of Fig. 1. Between the two support members 20 and 30 a further spacing means 80 is provided in the void space 70. This spacing means may be one or optionally more than one wire mesh. In the present embodiment as shown in Fig, 1, a wire mesh of stainless steel Wires with diameter of about 1 mm and 4 mesh openings per cm (10 per linear inch) is used.

This spacing means is provided in production of the disc-like filter element during the mounting of the filter support members and accompanying filter membranes to the hub.

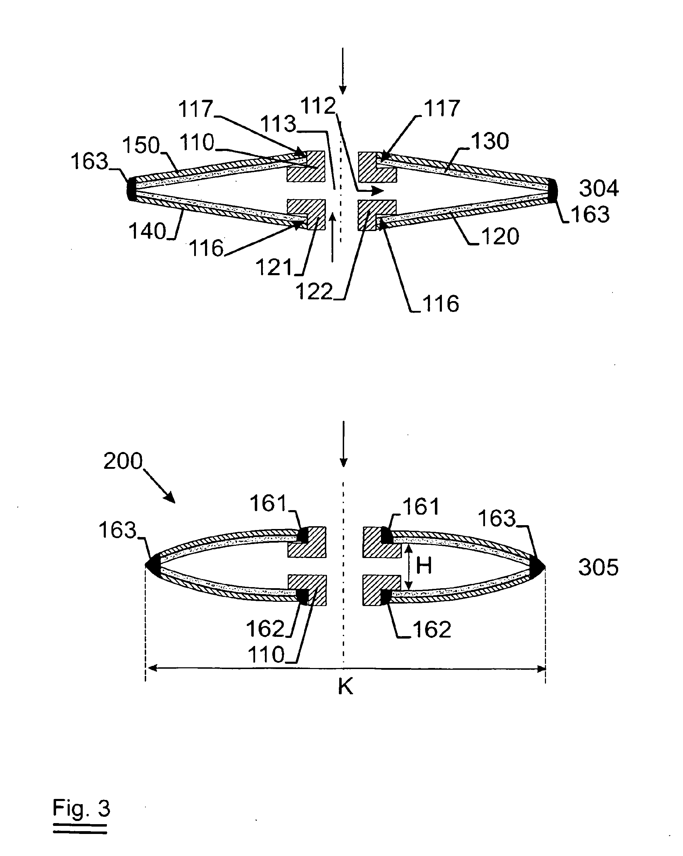

An alternative method to provide a disc-like filter element as subject of the present invention, is schematically shown in Fig. 3.

As referred to by reference 301, a first and a second substantially identical ring shape like, substantially flat liquid permeable support member 120 and 130 are provided, which are identical to the support members 20 and 30 of Fig. 1.

The inner edge 121 and 131 of the support members 120 and 130 is substantially circular.

A first and a second substantially identical ring shape like, substantially flat filter membrane 140 and 150 are provided, identical to the filter membranes 40 and 50 used in the method as schematically set out by Fig. 1.

The inner edge 141 and 151 of the filter membranes 140 and 150 is substantially circular. The diameter of the inner edge 141 and 151 of the filter membranes 140 and 150 is identical or slightly larger than D2 and substantially identical to the inner edge 121 and 131 of the support members 120 and 130. The larges distance Ws between two points of the inner edge is thus D2.

As referred to by reference 302, the first filter membrane 140 is brought into contact with the first surface 123 of the first support member 120. The second filter membrane 150 is brought into contact with the first surface 133 of the first support member 130. The first filter membrane and the first support member are brought in contact with the second filter membrane and the second support member. This is done in such a way that the second surface 124 of the first support member 120 is facing to the second surface 134 of the second support member 130.

The outer edges 122,132, 142 and 152 of the first support member 120, the second support member 130 the first filter membrane 140 and the second filter membrane 150 are now bend to each other and liquid tight fixed to each other. The liquid tight fixing is preferably done by welding, such as TIG-welding. A weld coupling 163 is provided. Alternatively, other methods of welding such as but welding, capacitive discharge welding, resistance welding, ultrasonic welding, micro plasma welding or laser welding may be used. As an other alternative, soldering such as high temperature soldering or sintering, or brazing, or extrusion of polymer material, fluid tight folding or gluing, may be used.

The intermediate product now obtained has two substantially flat and parallel support members extend. The second surface 124 of the first support member 120 and the second surface 134 of the second support member 130 are facing each other.

As referred to by reference 303, a hub 110 is provided having a coupling means 111, an outer wall 114 an inner void space 113 and at least one channel 112 extending from the inner void space 113 to the outer wall 114. The hub 110 consists out of two parts 120 and 121, which together form a tubular metal part having a central axis 115. The outer wall of the tube 114 has two rims 116 and 117, which are the coupling means 111 of the hub. Through the wall of the tubular part, a number of channels are provided which channels extend from the inner void of the tube to the outer wall 114. As an example, the hub has a diameter D1 of the inner void space of 50mm. The outer diameter D3 of the hub is about 70mm, whereas at the location of the rims 116 and 117, the diameter D2 of the tubular element is about 60mm. The total height A of the hub is about 10mm, whereas the distance H between the two rims is about 8mm.

As referred to by reference 304, the combination of first filter membrane 140, first support member 120, second filter membrane 150 and second support member 130 is than coupled to the hub by introducing the first part 121 and the second part 122 of the hub 110 between the first and second support member 120 and 130 via the inner edge 141 of the first filter membrane 140 and the inner edge 121 of the first support member 120, or via the inner edge 151 of the first filter membrane 150 and the inner edge 131 of the first support member 130.

The inner edge 141 of the first filter membrane 140 and the inner edge 121 of the first support member 120 is brought into contact with rim 116, inner edge 151 of the first filter membrane 150 and the inner edge 131 of the first support member 130 is brought into contact with rim 117.

The inner edge 121 and 131 of the support members 120 and 130 coincide with the diameter of the wall 114 of the hub 110 along the rim. The diameter of the inner edge of the support members is identical or slightly larger than D2.

The inner edge 141 and 151 of the filter membranes 140 and 150 coincide wit the diameter of the wall 114 of the hub 110 along the rims 116 and 117.

As referred to by reference 305, the inner edges 121 and 141 of the first filter membrane 140 and first support member 120 are now liquid-tight coupled to the hub 110 at the coupling means 111, i.e. the rim 116. In a similar way, the inner edges 131 and 151 of the first filter membrane 150 and first support member 30 are now liquid tight coupled to the hub 110 at the coupling means 111, i.e. the rim 117. This coupling can be done by any suitable joining technique, e.g. by gluing, but in the present example it is bone by welding, preferably TIG-welding. A weld coupling 161 or 162 is provided. Alternatively, other methods of welding such as but welding, capacitive discharge welding, resistance welding, ultrasonic welding, micro plasma welding or laser welding may be used. As an other alternative, soldering such as high temperature soldering or sintering, or brazing, or extrusion of polymer material, fluid tight folding or gluing, may be used.

The two parts 121 and 120 of the hub 110, are coupled to each other in a liquid tight way by any suitable technique, e.g. by gluing or welding.
The obtained disc-like filter element 200 has substantially the same properties as the properties of the hub 100 obtained by the method as disclosed by mean of Fig. 1.

Other arrangements for accomplishing the objectives of the methods to provide disc-like filter elements as well as disc-like filter elements itself, both embodying the invention will be obvious for those skilled in the art.

## Claims

1. A method to provide a disc-shaped filter element having a diameter K, said method comprising the steps of
• providing a first (20) and a second (30) substantially identical, ring-like shaped, substantially flat liquid permeable support member having an outer edge (22, 32) having a diameter Ds and an inner central edge (21, 31), said inner edge having a largest width Was, said first support member and said second support member each having a first surface and a second surface;
• providing a first (40) and a second (50) substantially identical, ring-like shaped, substantially flat filter membrane having an outer edge (42, 52) and an inner central edge (41, 51);
• providing a hub (10) having a central void space (13), an outer wall (14), at least one channel (12) extending from said void space through said outer wall and a coupling means (11) for coupling said inner edges (21, 31) of said support members (20, 30) and said inner edges (41, 51) of said filter membranes to said hub (10);
• bringing said first filter membrane into contact with a first surface of said first support member (20);
• bringing said second filter membrane into contact with a first surface of said second support member (30);
• coupling said inner edges (41) of said first membrane (40) and said inner edges (21) of said first support member (20) liquid-tight to said coupling means (11) of said hub (10);
• coupling said inner edges (51) of said second membrane (50) and said inner edges (31) of said second support member (30) liquid-tight to said coupling means (11) of said hub (10) in such a way that the second surface of said first support member and the second surface of the second support member are facing to each other and are separated from each other over a distance H being different from zero at the outer wall (14) of said hub (10), and having the at least one channel extending between said second surface of said first support member and the second surface of the second support member; and
• bending and liquid-tight fixing said outer edges (42) of said first filter membrane (40), said outer edges (52) of said second filter membrane (50), said outer edges (22) of said first support member (20) and said outer edges (32) of said second support member (30) to each other;
**characterized in that** said first filter membrane is thus gre-tensioned on said first surface of said first support member and said second filter membrane is thus pre-tensioned on said first surface of said second support member, and **in that**, for each of said first support member and said second support member, said support member thus has a radius of curvature r smaller than or equal to (K²/4H)+H/4 along at least a zone of said support member, which zone is delimited by a first imaginary circle along said support member having a diameter of 0.9*Ds and a second imaginary circle along the support member having a diameter of 1.1*Ws, said first imaginary circle and said second imaginary circle being concentric with said disc-like support member.

2. A method to provide a disc-shaped filter element having a diameter K, said method comprising the steps of
• providing a first (20) and a second (30) substantially identical, ring-like shaped, substantially flat liquid permeable support member having an outer edge (22, 32) having a diameter Ds and an inner central edge (21), said inner edge having a largest width Ws, said first support member and said second support member each having a first surface and a second surface;
• providing a first (40) and a second (50) substantially identical, ring-like shaped, substantially flat filter membrane having an outer edge (42, 52) and an inner central edge (41, 51);
• providing a hub (10) having a central void space (13), an outer wall (14), at least one channel (12) extending from said void space te through said outer wall and a coupling means (11) for coupling said inner edges (21, 31) of said support members (20, 30) and said inner edges (41, 51) of said filter membranes (40, 50) to said hub (10);
• bringing said first filter membrane into contact with a first surface of said first support member (20);
• bringing said second filter membrane into contact with a first surface of said second support member (30);
• liquid-tight fixing said outer edges (42) of said first filter membrane (40), said outer edges (52) of said second filter membrane (50), said outer edges (22) of said first support member (20) and said outer edges (32) of said second support member (30) to each other in such a way that the second surface of said first support member and the second surface of the second support member are facing to each other;
• coupling said inner edges (41) of said first membrane(40), said inner edges (51) of said second membrane (50), said inner edges (21) of said first support member (20) and said inner edges (31) of said second support member (30) liquid-tight to said coupling means (11) of said hub (10) in such a way that the second surface of said first support member and the second surface of the second support member are separated from each other over a distance H being different from zero at the outer wall of said hub (10), and having the at least one channel extending between said second surface of said first support member and the second surface of the second support member;
**characterized in that** said first filter membrane is thus pre-tensioned on said first surface of said first support member and said second filter membrane is thus pre-tensioned on said first surface of said second support member, and **in that**, for each of said first support member and said second support member, said support member thus has a radius of curvature r smaller than or equal to (K²/4H)+H/4 along at least a zone of said support member, which zone is delimited by a first imaginary circle along said support member having a diameter of 0.9*Ds and a second imaginary circle along the support member having a diameter of 1.1*Ws, said first imaginary circle and said second imaginary circle being concentric with said disc-like support member.

3. A method as in claim 2, wherein the step of coupling said inner edges of said first membrane (40), said inner edges of said second membrane (50), said inner edges of said first support member (20) and said inner edges of said second support member (30) liquid-tight to said coupling means (11) of said hub (10) is done by:
○ introducing said hub (10) between the second surface of said first support member (20) and the second surface of the second support member (30) through said inner edges of said first membrane and said inner edges of said first support member or through said inner edges of said second membrane and said inner edges of said second support member;
○ coupling said inner edges of said first membrane and said inner edges of said first support member liquid-tight to said coupling means (11) of said hub (10);
○ coupling said inner edges of said second membrane and said inner edges of said second support member liquid-tight to said coupling means (11) of said hub (10).

4. A method as in claim 2 or 3, wherein said hub (10) comprises a first part and a second part, said parts cooperating with each other for forming said hub (10), said step of introducing said hub (10) between the second surface of said first support member (20) and the second surface of the second support member (30) is done by introducing said first part and said second part, and liquid-tight coupling said first and said second part to each other.

5. A method as in any one of the claims 1 to 4, wherein the central openings of said first support member (20), said second support member (30), said first filter membrane and said second filter membrane are substantially circular and/or substantially identical.

6. A method as in any previous claim, wherein said liquid-tight fixing said outer edges of said first filter membrane, said second filter membrane, said first support member (20) and said second support member is done by welding.

7. A method as in any previous claim, wherein said coupling said inner edges of said first membrane and said inner edges of said first support member (20) to said coupling means (11) and coupling said inner edges of said second membrane and said inner edges of said second support member (30) to said coupling means (11) is done by welding.

8. A disc-shaped filter clement having a diameter K, said disc-shaped filter element comprising a first (20) and a second (30) ring-like shaped, liquid permeable support member having an outer edge (22, 32) having a diameter Ds and an inner central edge (21,31), said inner edge having a largest width Ws, said first support member and said second support member each having a first surface and a second surface, the second surface of the first support member facing towards the second surface of the second support member, said disc-shaped filter element comprising a first (40) and a second (50) ring shape-like filter membrane having an outer edge (42, 52) and an inner central edge (41, 51), the first filter membrane being in contact with the first surface of said first support member, the second filter membrane being in contact with the first surface of the second support member, the outer edges of said first filter membrane, said second filter membrane said first support member and said second support member being liquid-tight fixed to each other, said disc-shaped filter element comprising a hub (10) having a central void space (13), an outer wall (14), at least one channel (12) extending from said void space through said outer wall and a coupling means (11), said inner edges of said support members and said inner edges of said filter membranes being liquid-tight coupled to said coupling means (11) of said hub (10), said first surface of said first support member and the second surface of the second support member being separated from each other over a distance H being different from zero at the outer wall of said hub (10), said at least one channel extending between said second surface of said first support member and the second surface of the second support member; **characterized in that** said first filter membrane is pre-tensioned on said first surface of said first support member and said second filter membrane is pre-tensioned on said first surface of said second support member, and **in that** for each of said first support member and said second support member, said support member has a radius of curvature r smaller than or equal to (K²/4H)+H/4 along at least a zone of said support member, which zone is delimited by a first imaginary circle along said support member having a diameter of 0.9*Ds and a second imaginary circle along the support member having a diameter of 1.1*Ws, said first imaginary circle and said second imaginary circle being concentric with said disc-like support member.

9. A disc-shaped filter element as in claim 8, wherein said H is in the range of 5mm to 20mm and/or K is in the range of 150mm to 400mm.

10. A disc-shaped filter element as in claim 8 or 9, wherein the central openings of said first support member (20), said second support member (30), said first filter membrane and said second filter membrane are substantially circular and/or substantially identical.

11. A disc-shaped filter element as in any one of the claims 8 to 10, wherein said filter membranes comprise metal fibers.

12. A disc-shaped filter element as in one of claims 8 to 11, wherein said support member (20, 30) is a metal support member.

13. A disc-shaped filter element as in claim 12, wherein said liquid-tight fixing said outer edges of said first filter membrane, said second filter membrane, said support member membrane and said second support member is welded.

14. A disc-shaped filter element as in claim 13, wherein said hub (10) is a metal hub.

15. A disc-shaped filter element as in claim 14, wherein said coupling said inner edges of said first membrane and said inner edges of said first support member (20) to said coupling means (11) and coupling said inner edges of said second membrane and said inner edges of said second support member (30) to said coupling means (11) is welded.

## Patentansprüche

1. Verfahren zum Bereitstellen eines scheibenförmigen Filterelements mit einem Durchmesser K, wobei das Verfahren die folgenden Schritte umfasst:
- Bereitstellen eines ersten (20) und eines zweiten (30) im Wesentlichen identischen, ringförmigen, im Wesentlichen flachen, flüssigkeitsdurchlässigen Trägerelements mit einer Außenkante (22, 32) mit einem Durchmesser Ds und einer zentralen Innenkante (21, 31), wobei die Innenkante eine größte Breite Ws aufweist, wobei das erste Trägerelement und das zweite Trägerelement jeweils eine erste Oberfläche und eine zweite Oberfläche aufweisen;
- Bereitstellen einer ersten (40) und einer zweiten (50) im Wesentlichen identischen, ringförmigen, im Wesentlichen flachen Filtermembran mit einer Außenkante (42, 52) und einer zentralen Innenkante (41, 51);
- Bereitstellen einer Nabe (10) mit einem zentralen Hohlraum (13), einer Außenwand (14), mindestens einem Kanal (12), der sich von dem Hohlraum durch die Außenwand erstreckt, und einem Kopplungsmittel (11) zum Koppeln der Innenkanten (21, 31) der Trägerelemente (20, 30) und der Innenkanten (41, 51) der Filtermembrane an die Nabe (10);
- In-Kontakt-Bringen der ersten Filtermembran mit einer ersten Oberfläche des ersten Trägerelements (20);
- In-Kontakt-Bringen der zweiten Filtermembran mit einer ersten Oberfläche des zweiten Trägerelements (30);
- flüssigdichtes Koppeln der Innenkanten (41) der ersten Membran (40) und der Innenkanten (21) des ersten Trägerelements (20) mit dem Kopplungsmittel (11) der Nabe (10);
- flüssigdichtes Koppeln der Innenkanten (51) der zweiten Membran (50) und der Innenkanten (31) des zweiten Trägerelements (30) mit dem Kopplungsmittel (11) der Nabe (10) in derartiger Weise, dass die zweite Oberfläche des ersten Trägerelements und die zweite Oberfläche des zweiten Trägerelements einander zugewandt sind und voneinander durch eine Distanz H, die ungleich Null ist, an der Außenwand (14) der Nabe (10) getrennt sind, und wobei sich der mindestens eine Kanal zwischen der zweiten Oberfläche des ersten Trägerelements und der zweiten Oberfläche des zweiten Trägerelements erstreckt; und
- Biegen und flüssigkeitsdichtes Befestigen der Außenkanten (42) der ersten Filtermembran (40), der Außenkanten (52) der zweiten Filtermembran (50), der Außenkanten (22) des ersten Trägerelements (20) und der Außenkanten (32) des zweiten Trägerelements (30) aneinander;
**dadurch gekennzeichnet, dass** die erste Filtermembran somit auf der ersten Oberfläche des ersten Trägerelements vorgespannt ist und die zweite Filtermembran somit auf der ersten Oberfläche des zweiten Trägerelements vorgespannt ist, und dass, für jedes von dem ersten Trägerelement und dem zweiten Trägerelement das Trägerelement somit einen Krümmungsradius r kleiner oder gleich (K²/4H)+H/4 entlang mindestens einer Zone des Trägerelements aufweist, wobei die Zone durch einen ersten imaginären Kreis entlang dem Trägerelement mit einem Durchmesser von 0,9*Ds und einen zweiten imaginären Kreis entlang dem Trägerelement mit einem Durchmesser von 1,1*Ws begrenzt ist, wobei der ersten imaginäre Kreis und der zweite imaginäre Kreis mit dem scheibenförmigen Trägerelement konzentrisch sind.

2. Verfahren zum Bereitstellen eines scheibenförmigen Filterelements mit einem Durchmesser K, wobei das Verfahren die folgenden Schritte umfasst:
- Bereitstellen eines ersten (20) und eines zweiten (30) im Wesentlichen identischen, ringförmigen, im Wesentlichen flachen, flüssigkeitsdurchlässigen Trägerelements mit einer Außenkante (22, 32) mit einem Durchmesser Ds und einer zentralen Innenkante (21), wobei die Innenkante eine größte Breite Ws aufweist, wobei das erste Trägerelement und das zweite Trägerelement jeweils eine erste Oberfläche und eine zweite Oberfläche aufweisen;
- Bereitstellen einer ersten (40) und einer zweiten (50) im Wesentlichen identischen, ringförmigen, im Wesentlichen flachen Filtermembran mit einer Außenkante (42, 52) und einer zentralen Innenkante (41, 51);
- Bereitstellen einer Nabe (10) mit einem zentralen Hohlraum (13), einer Außenwand (14), mindestens einem Kanal (12), der sich von dem Hohlraum durch die Außenwand erstreckt, und einem Kopplungsmittel (11) zum Koppeln der Innenkanten (21, 31) der Trägerelemente (20, 30) und der Innenkanten (41, 51) der Filtermembrane an die Nabe (10);
- In-Kontakt-Bringen der ersten Filtermembran mit einer ersten Oberfläche des ersten Trägerelements (20);
- In-Kontakt-Bringen der zweiten Filtermembran mit einer ersten Oberfläche des zweiten Trägerelements (30);
- flüssigkeitsdichtes Befestigen der Außenkanten (42) der ersten Filtermembran (40), der Außenkanten (52) der zweiten Filtermembran (50), der Außenkanten (22) des ersten Trägerelements (20) und der Außenkanten (32) des zweiten Trägerelements (30) aneinander in derartiger Weise, dass die zweite Oberfläche des ersten Trägerelements und die zweite Oberfläche des zweiten Trägerelements einander zugewandt sind;
- flüssigkeitsdichtes Koppeln der Innenkanten (41) der ersten Membran (40), der Innenkanten (51) der zweiten Membran (50), der Innenkanten (21) des ersten Trägerelements (20) und der Innenkanten (31) des zweiten Trägerelements (30) mit dem Kopplungsmittel (11) der Nabe (10) in derartiger Weise, dass die zweite Oberfläche des ersten Trägerelements und die zweite Oberfläche des zweiten Trägerelements voneinander durch eine Distanz H, die ungleich Null ist, an der Außenwand der Nabe (10) getrennt sind, wobei sich der mindestens eine Kanal zwischen der zweiten Oberfläche des ersten Trägerelements und der zweiten Oberfläche des zweiten Trägerelements erstreckt;
**dadurch gekennzeichnet, dass** die erste Filtermembran somit auf der ersten Oberfläche des ersten Trägerelements vorgespannt ist und die zweite Filtermembran somit auf der ersten Oberfläche des zweiten Trägerelements vorgespannt ist, und dass, für jedes von dem ersten Trägerelement und dem zweiten Trägerelement das Trägerelement somit einen Krümmungsradius r kleiner oder gleich (K²/4H)+H/4 entlang mindestens einer Zone des Trägerelements aufweist, wobei die Zone durch einen ersten imaginären Kreis entlang dem Trägerelement mit einem Durchmesser von 0,9*Ds und einen zweiten imaginären Kreis entlang dem Trägerelement mit einem Durchmesser von 1,1*Ws begrenzt ist, wobei der ersten imaginäre Kreis und der zweite imaginäre Kreis mit dem scheibenförmigen Trägerelement konzentrisch sind.

3. Verfahren nach Anspruch 2, wobei der Schritt zum flüssigkeitsdichten Koppeln der Innenkanten der ersten Membran (40), der Innenkanten der zweiten Membran (50), der Innenkanten des ersten Trägerelements (20) und der Innenkanten des zweiten Trägerelements (30) an das Kopplungsmittel (11) der Nabe (10) erfolgt durch:
- Einsetzen der Nabe (10) zwischen die zweite Oberfläche des ersten Trägerelements (20) und die zweite Oberfläche des zweiten Trägerelements (30) durch die Innenkanten der ersten Membran und die Innenkanten des ersten Trägerelements oder durch die Innenkanten der zweiten Membran und die Innenkanten des zweiten Trägerelements;
- flüssigkeitsdichtes Koppeln der Innenkanten der ersten Membran und der Innenkanten des ersten Trägerelements an das Kopplungsmittel (11) der Nabe (10);
- flüssigkeitsdichtes Koppeln der Innenkanten der zweiten Membran und der Innenkanten des zweiten. Trägerelements an das Kopplungsmittel (11) der Nabe (10).

4. Verfahren nach Anspruch 2 oder 3, wobei de Nabe (10) ein erstes Teil und ein zweites Teil umfasst, wobei die Teile miteinander zur Bildung der Nabe (10) zusammenwirken, wobei der Schritt des. Einsetzens der Nabe (10) zwischen die zweite Oberfläche des ersten Trägerelements (20) und die zweite Oberfläche des zweiten Trägerelements (30) durch Einsetzen des ersten Teils und des zweiten Teils und flüssigkeitsdichtes Aneinanderkoppeln des ersten Teils und des zweiten Teils erfolgt.

5. Verfahren nach einem der Ansprüche 1 bis 4, wobei die zentralen Öffnungen des ersten Trägerelements (20), des zweiten Trägerelements (30), der ersten Filtermembran und der zweiten Filtermembran im Wesentlichen kreisförmig und/oder im Wesentlichen identisch sind.

6. Verfahren nach einem der vorangehenden Ansprüche, wobei die flüssigkeitsdichte Befestigung der Außenkanten der ersten Filtermembran, der zweiten Filtermembran, des ersten Trägerelements (20) und des zweiten Trägerelements durch Schweißen erfolgt.

7. Verfahren nach einem der vorangehenden Ansprüche, wobei das Koppeln der Innenkanten der ersten Membran und der Innenkanten des ersten Trägerelements (20) an das Kopplungsmittel (11) und das Koppeln der Innenkanten der zweiten Membran und der Innenkanten des zweiten Trägerelements (30) an das Kopplungsmittel (11) durch Schweißen erfolgt.

8. Scheibenförmiges Filterelement mit einem Durchmesser K, wobei das scheibenförmige Filterelement ein erstes (20) und ein zweites (30) ringförmiges, flüssigkeitsdurchlässiges Trägerelement mit einer Außenkante (22, 32) mit einem Durchmesser Ds und einer zentralen Innenkante (21, 31) aufweist, wobei die Innenkante eine größte Breite Ws aufweist, wobei das erste Trägerelement und das zweite Trägerelement jeweils eine erste Oberfläche und eine zweite Oberfläche aufweisen, wobei die zweite Oberfläche des ersten Trägerelements der zweiten Oberfläche des zweiten Trägerelements zugewandt ist, wobei das scheibenförmige Trägerelement eine erste (40) und eine zweite (50) ringförmige Filtermembran mit einer Außenkante (42, 52) und einer zentraler Innenkante (41, 51) aufweist, wobei die erste Filtermembran in Kontakt mit der ersten Oberfläche des ersten Trägerelements steht, die zweite Filtermembran in Kontakt mit der ersten Oberfläche des zweiten Trägerelements steht, die Außenkanten der ersten Filtermembran, der zweiten Filtermembran, des ersten Trägerelements und des zweiten Trägerelements flüssigkeitsdicht aneinander befestigt sind, wobei das scheibenförmige Filterelement eine Nabe (10) mit einem zentralen Hohlraum (13), einer Außenwand (14) mindestens einem Kanal (12), der sich von dem Hohlraum durch die Außenwand erstreckt, und einem Kopplungsmittel (11) umfasst, wobei die Innenkanten der Trägerelemente und die Innenkanten der Filtermembrane flüssigkeitsdicht an das Kopplungsmittel (11) der Nabe (10) gekoppelt sind, wobei die erste Oberfläche des ersten Trägerelements und die zweite Oberfläche des zweiten Trägerelements durch eine Distanz H, die ungleich Null ist, an der Außenwand der Nabe (10) voneinander getrennt sind, und der mindestens eine Kanal sich zwischen der zweiten Oberfläche des ersten Trägerelements und der zweiten Oberfläche des zweiten Trägerelements erstreckt;
**dadurch gekennzeichnet, dass** die erste Filtermembran auf der ersten Oberfläche des ersten Trägerelements vorgespannt ist und die zweite Filtermembran auf der ersten Oberfläche des zweiten Trägerelements vorgespannt ist, und dass, für jedes von dem ersten Trägerelement und dem zweiten Trägerelement, das Trägerelement einen Krümmungsradius r kleiner oder gleich (K²/4H)+H/4 entlang mindestens einer Zone des Trägerelements aufweist, wobei die Zone durch einen ersten imaginären Kreis entlang dem Trägerelement mit einem Durchmesser von 0,9*Ds und einen zweiten imaginären Kreis entlang dem Trägerelement mit einem Durchmesser von 1,1*Ws begrenzt ist, wobei der ersten imaginäre Kreis und der zweite imaginäre Kreis mit dem scheibenförmigen Trägerelement konzentrisch sind.

9. Scheibenförmiges Filterelement nach Anspruch 8, wobei H im Bereich von 5 mm bis 20 mm liegt und/oder K im Bereich von 150 mm bis 400 mm liegt.

10. Scheibenförmiges Filterelement nach Anspruch 8 oder 9, wobei die zentralen Öffnungen des ersten Trägerelements (20), des zweiten Trägerelements (30), der ersten Filtermembran und der zweiten Filtermembran im Wesentlichen kreisförmig und/oder im Wesentlichen identisch sind.

11. Scheibenförmiges Filterelement nach einem der Ansprüche 8 bis 10, wobei die Filtermembrane Metallfasern umfassen.

12. Scheibenförmiges Filterelement nach einem der Ansprüche 8 bis 11, wobei das Trägerelement (20, 30) ein Metallträgerelement ist.

13. Scheibenförmiges Filterelement nach Anspruch 12, wobei die flüssigkeitsdichte Befestigung der Außenkanten der ersten Filtermembran, der zweiten Filtermembran, des ersten Trägerelements und des zweiten Trägerelements geschweißt ist.

14. Scheibenförmiges Filterelement nach Anspruch 13, wobei die Nabe (10) eine Metallnabe ist.

15. Scheibenförmiges Filterelement nach Anspruch 14, wobei die Kopplung der Innenkanten der ersten Membran und der Innenkanten des ersten Trägerelements (20) an das Kopplungsmittel (11) und die Kopplung der Innenkanten der zweiten Membran und der Innenkanten des zweiten Trägerelements (30) an das Kopplungsmittel (11) geschweißt sind.

## Revendications

1. Procédé pour réaliser un élément de filtre en forme de disque ayant un diamètre K, ledit procédé comprenant les étapes de
• fourniture d'un premier (20) et d'un second (30) élément de support, perméables au liquide sensiblement plats, de forme semblable à un anneau, sensiblement identiques, ayant un bord extérieur (22, 32) ayant un diamètre Ds et un bord central intérieur (21, 31), ledit bord intérieur ayant une plus grande largeur Ws, ledit premier élément de support et ledit second élément de support ayant chacun une première surface et une seconde surface ;
• fourniture d'une première (40) et d'une seconde (50) membrane de filtre sensiblement plates, de forme semblable à un anneau, sensiblement identiques, ayant un bord extérieur (42, 52) et un bord central intérieur (41, 51) ;
• fourniture d'un moyeu (10) ayant un espace vide central (13), une paroi extérieure (14), au moins un canal (12) s'étendant à partir dudit espace vide à travers ladite paroi extérieure et un moyen d'accouplement (11) pour accoupler lesdits bords intérieurs (21, 31) desdits éléments de support (20, 30) et lesdits bords intérieurs (41, 51) desdites membranes de filtre audit moyeu (10) ;
• amenée de ladite première membrane de filtre en contact avec une première surface dudit premier élément de support (20) ;
• amenée de ladite seconde membrane de filtre en contact avec une première surface dudit second élément de support (30) ;
• accouplement étanche desdits bords intérieurs (41) de ladite première membrane (40) et desdits bords intérieurs (21) dudit premier élément de support (20) audit moyen d'accouplement (11) dudit moyeu (10) ;
• accouplement étanche desdits bords intérieurs (51) de ladite seconde membrane (50) et desdits bords intérieurs (31) dudit second élément de support (30) audit moyen d'accouplement (11) dudit moyeu (10) de telle façon que la seconde surface dudit premier élément de support et la seconde surface du second élément de support se font face et sont séparées l'une de l'autre d'une distance H différente de zéro au niveau de la paroi extérieure (14) dudit moyeu (10), et ayant l'au moins un canal s'étendant entre ladite seconde surface dudit premier élément de support et la seconde surface du second élément de support ; et
• courbure et fixation étanche desdits bords extérieurs (42) de ladite première membrane de filtre (40), desdits bords extérieurs (52) de ladite seconde membrane de filtre (50), desdits bords extérieurs (22) dudit premier élément de support (20) et desdits bords extérieurs (32) dudit second élément de support (30) les uns aux autres ;
**caractérisé en ce que** ladite première membrane de filtre est ainsi précontrainte sur ladite première surface dudit premier élément de support et ladite seconde membrane de filtre est ainsi précontrainte sur ladite première surface dudit second élément de support, et **en ce que**, pour chacun dudit premier élément de support et dudit second élément de support, ledit élément de support a ainsi un rayon de courbure r inférieur ou égal à (K²/4H)+H/4 le long d'au moins une zone dudit élément de support, laquelle zone est délimitée par un premier cercle imaginaire le long dudit élément de support ayant un diamètre de 0,9*Ds et un second cercle imaginaire le long de l'élément de support ayant un diamètre de 1,1*Ws, ledit premier cercle imaginaire et ledit second cercle imaginaire étant concentriques avec ledit élément de support semblable à un disque.

2. Procédé pour réaliser un élément de filtre en forme de disque ayant un diamètre K, ledit procédé comprenant les étapes de
• fourniture d'un premier (20) et d'un second (30) élément de support, perméables au liquide sensiblement plats, de forme semblable à un anneau, sensiblement identiques, ayant un bord extérieur (22, 32) ayant un diamètre Ds et un bord central intérieur (21), ledit bord intérieur ayant une plus grande largeur Ws, ledit premier élément de support et ledit second élément de support ayant chacun une première surface et une seconde surface ;
• fourniture d'une première (40) et d'une seconde (50) membrane de filtre, sensiblement plates, de forme semblable à un anneau, sensiblement identiques, ayant un bord extérieur (42, 52) et un bord central intérieur (41, 51) ;
• fourniture d'un moyeu (10) ayant un espace vide central (13), une paroi extérieure (14), au moins un canal (12) s'étendant à partir dudit espace vide à travers ladite paroi extérieure et un moyen d'accouplement (11) pour accoupler lesdits bords intérieurs (21, 31) desdits éléments de support (20, 30) et lesdits bords intérieurs (41, 51) desdites membranes de filtre (40, 50) audit moyeu (10) ;
• amenée de ladite première membrane de filtre en contact avec une première surface dudit premier élément de support (20) ;
• amenée de ladite seconde membrane de filtre en contact avec une première surface dudit second élément de support (30) ;
• fixation étanche desdits bords extérieurs (42) de ladite première membrane de filtre (40), desdits bords extérieurs (52) de ladite seconde membrane de filtre (50), desdits bords extérieurs (22) dudit premier élément de support (20) et desdits bords extérieurs (32) dudit second élément de support (30) les uns aux autres d'une telle façon que la seconde surface dudit premier élément de support et la seconde surface du second élément de support se font face ;
• accouplement étanche desdits bords intérieurs (41) de ladite première membrane (40), desdits bords intérieurs (51) de ladite seconde membrane (50), desdits bords intérieurs (21) dudit premier élément de support (20) et desdits bords intérieurs (31) dudit second élément de support (30) audit moyen d'accouplement (11) dudit moyeu (10) de telle façon que la seconde surface dudit premier élément de support et la seconde surface du second élément de support sont séparées l'une de l'autre d'une distance H différente de zéro au niveau de la paroi extérieure dudit moyeu (10), et ayant l'au moins canal s'étendant entre ladite seconde surface dudit premier élément de support et la seconde surface du second élément de support ;
**caractérisé en ce que** ladite première membrane de filtre est ainsi précontrainte sur ladite première surface dudit premier élément de support et ladite seconde membrane de filtre est ainsi précontrainte sur ladite première surface dudit second élément de support, et **en ce que**, pour chacun dudit premier élément de support et dudit second élément de support, ledit élément de support a ainsi un rayon de courbure r inférieur ou égal à (K²/4H)+H/4 le long d'au moins une zone dudit élément de support, laquelle zone est délimitée par un premier cercle imaginaire le long dudit élément de support ayant un diamètre de 0,9*Ds et par un second cercle imaginaire le long de l'élément de support ayant un diamètre de 1,1*Ws, ledit premier cercle imaginaire et ledit second cercle imaginaire étant concentriques avec ledit élément de support semblable à un disque.

3. Procédé selon la revendication 2, dans lequel l'étape d'accouplement étanche desdits bords intérieurs de ladite première membrane (40), desdits bords intérieurs de ladite seconde membrane (50), desdits bords intérieurs dudit premier élément de support (20) et desdits bords intérieurs dudit second élément de support (30) audit moyen d'accouplement (11) dudit moyeu (10) est effectuée par :
- l'introduction dudit moyeu (10) entre la seconde surface dudit premier élément de support (20) et la seconde surface du second élément de support (30) à travers lesdits bords intérieurs de ladite première membrane et lesdits bords intérieurs dudit premier élément de support ou à travers lesdits bords intérieurs de ladite seconde membrane et lesdits bords intérieurs dudit second élément de support ;
- l'accouplement étanche desdits bords intérieurs de ladite première membrane et desdits bords intérieurs dudit premier élément de support audit moyen d'accouplement (11) dudit moyeu (10) ;
- l'accouplement étanche desdits bords intérieurs de ladite seconde membrane et desdits bords intérieurs dudit second élément de support audit moyen d'accouplement (11) dudit moyeu (10).

4. Procédé selon la revendication 2 ou 3, dans lequel ledit moyeu (10) comprend une première partie et une seconde partie, lesdites parties coopérant l'une avec l'autre pour former ledit moyeu (10), ladite étape d'introduction dudit moyeu (10) entre la seconde surface dudit premier élément de support (20) et la seconde surface du second élément de support (30) est effectuée en introduisant ladite première partie et ladite seconde partie, et par l'accouplement étanche de ladite première et de ladite seconde partie l'une à l'autre.

5. Procédé selon l'une quelconque des revendications 1 à 4, dans lequel les ouvertures centrales dudit premier élément de support (20), dudit second élément de support (30), de ladite première membrane de filtre et de ladite seconde membrane de filtre sont sensiblement circulaires et/ou sensiblement identiques.

6. Procédé selon l'une quelconque des revendications précédentes, dans lequel ladite fixation étanche desdits bords extérieurs de ladite première membrane de filtre, de ladite seconde membrane de filtre, dudit premier élément de support (20) et dudit second élément de support est effectuée par soudage.

7. Procédé selon l'une quelconque des revendications précédentes, dans lequel ledit accouplement desdits bords intérieurs de ladite première membrane et desdits bords intérieurs dudit premier élément de support (20) audit moyen d'accouplement (11) et l'accouplement desdits bords intérieurs de ladite seconde membrane et desdits bords intérieurs dudit second élément de support (30) audit moyen d'accouplement (11) sont effectués par soudage.

8. Élément de filtre en forme de disque ayant un diamètre K, ledit élément de filtre en forme de disque comprenant un premier (20) et un second (30) élément de support, perméables au liquide, de forme semblable à un anneau, ayant un bord extérieur (22, 32) ayant un diamètre Ds et un bord central intérieur (21, 31), ledit bord intérieur ayant une plus grande largeur Ws, ledit premier élément de support et ledit second élément de support ayant chacun une première surface et une seconde surface, la seconde surface dudit premier élément de support faisant face vers la seconde surface du second élément de support, ledit élément de filtre en forme de disque comprenant une première (40) et une seconde (50) membrane de filtre, semblables à une forme de disque ayant un bord extérieur (42, 52) et un bord central intérieur (41, 51), la première membrane de filtre étant en contact avec la première surface dudit premier élément de support, la seconde membrane de filtre étant en contact avec la première surface du second élément de support, les bords extérieurs de ladite première membrane de filtre, de ladite seconde membrane de filtre, dudit premier élément de support et dudit second élément de support étant fixés de manière étanche les uns aux autres, ledit élément de filtre en forme de disque comprenant un moyeu (10) ayant un espace vide central (13), une paroi extérieure (14), au moins un canal (12) s'étendant à partir dudit espace vide à travers ladite paroi extérieure, et un moyen d'accouplement (11), lesdits bords intérieurs desdits éléments de support et lesdits bords intérieurs desdites membranes de filtre étant accouplés de manière étanche audit moyen d'accouplement (11) dudit moyeu (10), ladite première surface dudit premier élément de support et la seconde surface du second élément de support étant séparées l'une de l'autre d'une distance H différente de zéro au niveau de la paroi extérieure dudit moyeu (10), ledit au moins un canal s'étendant entre ladite seconde surface dudit premier élément de support et la seconde surface du second élément de support ;
**caractérisé en ce que** ladite première membrane de filtre est précontrainte sur ladite première surface dudit premier élément de support et ladite seconde membrane de filtre est précontrainte sur ladite première surface dudit second élément de support, et **en ce que** pour chacun dudit premier élément de support et dudit second élément de support, ledit élément de support a un rayon de courbure r inférieur ou égal à (K²/4H)+H/4 le long d'au moins une zone dudit élément de support, laquelle zone est délimitée par un premier cercle imaginaire le long dudit élément de support ayant un diamètre de 0,9*Ds et un second cercle imaginaire le long de l'élément de support ayant un diamètre de 1,1*Ws, ledit premier cercle imaginaire et ledit second cercle imaginaire étant concentriques avec ledit élément de support semblable à un disque.

9. Élément de filtre en forme de disque selon la revendication 8, dans lequel ledit H est dans la plage de 5 mm à 20 mm et/ou K est dans la plage de 150 mm à 400 mm.

10. Élément de filtre en forme de disque selon la revendication 8 ou 9, dans lequel les ouvertures centrales dudit premier élément de support (20), dudit second élément de support (30), de ladite première membrane de filtre et de ladite seconde membrane de filtre sont sensiblement circulaires et/ou sensiblement identiques.

11. Élément de filtre en forme de disque, selon l'une quelconque des revendications 8 à 10, dans lequel lesdites membranes de filtre comprennent des fibres de métal.

12. Élément de filtre en forme de disque selon l'une des revendications 8 à 11, dans lequel ledit élément de support (20, 30) est un élément de support de métal.

13. Élément de filtre en forme de disque selon la revendication 12, dans lequel ladite fixation étanche desdits bords extérieurs de ladite première membrane de filtre, de ladite seconde membrane de filtre, dudit premier élément de support et dudit second élément de support est soudée.

14. Élément de filtre en forme dé disque selon la revendication 13, dans lequel ledit moyeu (10) est un moyeu de métal.

15. Élément de filtre en forme de disque selon la revendication 14, dans lequel ledit accouplement desdits bords intérieurs de ladite première membrane et desdits bords intérieurs dudit premier élément de support (20) audit moyen d'accouplement (11) et l'accouplement desdits bords intérieurs de ladite seconde membrane et desdits bords intérieurs dudit second élément de support (30) audit moyen d'accouplement (11) sont soudés.
